# EUROPÄISCHE PATENTSCHRIFT

(11) **EP 0 733 471 B1**
(45) Veröffentlichungstag und Bekanntmachung des Hinweises auf die Patenterteilung: **12.01.2000**
(21) Anmeldenummer: 96103602.7
(22) Anmeldetag: 08.03.1996
(51) Int. Cl.: B32B 27/08, B65D 65/40

(54) **Klebstofffreie, sterilisationsfeste Mehrschichtfolie für Verpackungsanwendungen**
Adhesive-free, sterilisable packaging laminate
Feuille d'emballage multicouche, stérilisable et sans adhésif

(30) Priorität: 21.03.1995 DE 19510136
(43) Veröffentlichungstag der Anmeldung: 25.09.1996
(73) Patentinhaber: WOLFF WALSRODE AG, 29655 Walsrode (DE)
(72) Erfinder: Gasse, Andreas S., Dr., 29664 Walsrode (DE); Klein, Rudi, 29664 Walsrode (DE)
(74) Vertreter: Pettrich, Klaus-Günter, Dr.

(56) Entgegenhaltungen:
- EP-A- 0 288 972
- EP-A- 0 526 814
- DE-A- 3 618 775
- US-A- 4 407 873

## Beschreibung

Die vorliegende Erfindung betrifft Mehrschichtfolien für Verpackungsanwendungen, vorzugsweise im Lebenmittelbereich. Die Folien sind dadurch gekennzeichnet, daß sie tiefziehbar und siegelbar sind und zeichnen sich dadurch aus, daß sie klebstoffrei hergestellt werden können und für Sterilisationsanwendungen einsetzbar sind.

Für die Sterilisation von Folien bzw. Füllgut in Verpackungsfolien sind unterschiedliche Verfahren bekannt. Man unterscheidet die Gassterilisation (üblicherweise mit Ethylenoxid), die Sterilisation mit Gammastrahlen und die Heißdampfsterilisation. Diese werden üblicherweise in Autoklaven durchgeführt. Die Sterilisation wird bei Temperaturen über 100°C durchgeführt, wobei das zu sterilisierende Material 30 Minuten dieser Temperatur ausgesetzt wird. Die am häufigsten angewendete Temperatur ist 121°C im Gegendruckautoklaven. Im weiteren soll der Stand der Technik im Bereich "Folien für die Heißdampfsterilisation" beschrieben werden.

Folien, die siegelbar sind müssen mindestens zweischichtig sein, wobei eine Schicht als Trägerschicht und eine als Siegelschicht dient. Ist die Trägerschicht Aluminium, Papier oder eine gereckte Folie, so kann diese zwar sterilisationsfest aber nicht tiefziehbar sein. Beispiele hierfür sind in EP 474 587, JP 56082 247, JP 05031867, DE 3623 568 und EP 21 578 beschrieben.

Als grundsätzlich tiefziehbare Trägermaterialien sind ungereckte Polymerschichten wie Polycarbonat (NL 7214460), Polystyrol (BE 877 054), Polypropylen (CA 1150 461, J5 4032 584), Polybutylenterephthalat (JP 06226930) u.s.w. geeignet.

Ein großer Teil der sterilisationsfesten Folien ist mittels Kaschierkleber herzustellen (DE 3545 768, EP 474 587, JP 03254939, EP 26 954, EP 21 578, DT 2829 871, BE 877 054, J5 1124 180, NL 7214460, EP 50 255, EP 225 164). Der Nachteil solcher Folien ist die im Vergleich zu klebstofffreien Folien höhere Steifigkeit und schlechtere Tiefziehbarkeit.

Als Siegelschichtmaterial wird bevorzugt Polyproylen, Polypropylencopolymere oder Polymerblends, enthaltend Polyproylenbasierende Polymere, eingesetzt (JP 03254 939, JP 03126 557, EP 0629227, JP 63270 140, EP 288 972, DE 3545 768, DE 3431 364, DE 3315 652, EP 21548, JP 54032 584, JP 51124 180, NL 72114460). Solche Materialien gewährleisten zwar aufgrund ihrer hohen Kristallitschmelzpunkte die Sterilisationsfestigkeit, sind aber aus gleichem Grunde auch nur bei sehr hohen Siegeltemperaturen versiegelbar, was im allgemeinen unerwünscht ist.

EP-A-0 526 814 beschreibt eine mehrschichtige Folie aufgebaut aus jeweils zwei Schichten Polyamid und Haftvermittler im Wechsel und einer Polyolefinsiegelschicht ohne dabei auf die Notwendigkeit hoher Kristallitschmelzpunkte, insbesondere der Polyolefinsiegelschicht, einzugehen.

Die Sterilisationsfestigkeit bis 121°C wurde explizit nur in den Patentschriften EP 0629227, EP 50 255, EP 21578 und NL 7214460 erwähnt. In allen Fällen handelt es sich dabei um Polypropylen oder Polypropylencopolymersiegelschichten. Weiterhin sind auch Polyethylene erwähnt, wobei aber niedrigere Sterilisationstemperaturen angegeben werden (z.B. JP 56082247: < 100°C).

Zusammenfassend kann festgestellt werden, daß für Sterilisationsanwendungen überwiegend kaschierte Folienverbunde vorgeschlagen werden, die Polypropylensiegelschichten enthalten. Diese haben den Nachteil, daß sie schlecht tiefziehbar sind und zur Versiegelung sehr hohe Siegeltemperaturen erforderlich sind.

Daher stellte sich die Aufgabe eine Folie auf Basis von Polyamid und Polyethylen vorzugsweise für die Verpackung von Lebensmitteln bereitzustellen, die sterilisierbar (121°C, 30 Minuten) und gleichzeitig sehr gut tiefziehbar ist. Die Folie soll klebstofffrei sein und sowohl vor als auch nach der Sterilisation hohe Verbundhaftungwerte aufweisen. Die Versiegelung einer solchen Folie soll bei möglichst geringer Siegeltemperatur möglich sein.

Überraschenderweise gelang dies durch eine mehrschichtige, tiefziehbare und sterilisationsfeste Folie mit dem Schichtenaufbau A / B / A / B / C, die dadurch gekennzeichnet daß, A ein Polyamid (PA) ist, B ein polymerer Haftvermittler (HV) mit einem Kristallitschmelzpunkt von größer oder gleich 121°C ist und C ein Polyethylen (PE) ist, bestehend aus einem Homopolymer des Polyethylen oder aus einem Copolymer des Polyethylen oder aus einem Polyolefinblend aus Polyethylenen, wobei mindestens eine Komponente einen Kristallitschmelzpunkt von größer oder gleich 121°C hat.

Dabei ist das Polyethylen (PE) vorzugweise ein Linear Low Density Polyethylen (LLDPE) oder ein Polyolefinblend aus Linear Low Density Polyethylen (LLDPE) und Low Density Polyethylen (LDPE). Das Linear Low Density Polyethylen (LLDPE) selbst ist ein Copolymer aus Ethylen und einem C3 bis C12 alpha-Olefin ist, mit einem Melt Flow Index (MFI) von 0,1 bis 20 g/min (190°C; 2,16 kg), einer Dichte von 0,915 bis 0,955 g/cm³ und einen Kristallitschmelzpunkt von größer oder gleich 121°C, das Low Density Polyethylen (LDPE) ein solches mit einen Melt Flow Index (MFI) von 0,1 bis 20 g/min (190°C; 2,16 kg) und eine Dichte von 0,915 bis 0,935 g/cm³. Das Verhältnis von LLDPE zu LDPE sollte 99:1 bis 30:70 vorzugsweise 85:15 bis 50:50 betragen.

Die Polyamidschicht besteht aus den aliphatischen Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten, aus einem aromatischen oder teilaromatischem Polyamid oder aus einer Mischung der genannten Polyamide besteht. Eine wichtige Ausführungsform stellt eine Mischung aus PA6 und einem aromatischen Polyamid dar, die durch das Verhältnis von PA6 zum aromatischen Polyamid von 90:10 bis 80:20 gekennzeichnet ist.

Der polymere Haftvermittler ist ein anhydridmodifiziertes Polyethylen, ein Säurecopolymer des Ethylen, ein säuremodifiziertes Ethylenvinylacetat, ein säuremodifiziertes Ethylen(meth)acrylat, anhydridmodifiziertes Ethylen(meth)acrylat, ein anhydridmodifiziertes Ethylenvinylacetat, ein säure-/acrylatmodifiziertes Ethylenvinylacetat oder ein Polymerblend ist, enthaltend mindestens einen der genannten Haftvermittler. Die Haftvermittler-Schicht (HV) besteht vorzugsweise aus einem anhydridmodifizierten Polyethylen. Unter diesen sind wiederum die maleinsäureanhydridgepfropften Linar Low Density Polyethylene (LLDPE) zu bevorzugen.

Die Gesamtdicke der Folie beträgt 20 bis 500 µm, vorzugsweise 50 bis 350 µm. Die Dicken der Schichten sind dadurch gekennzeichnet, daß die Summe aus den Dicken der A-Schichten 20 bis 70% der Gesamtfoliendicke ausmachen, wobei das Verhältnis aus der Summe der Dicken der B-Schicht zur Summe aus den Dicken der A-Schichten 0,1 bis 1 und das Verhältnis aus der Dicke der C-Schicht zur Summe aus den Dicken der A-Schichten 0,2 bis 3 beträgt.

Grundsätzlich kann die Folie zusätzlich übliche Zusatz- und Hilfsstoffe enthalten. Zum Beispiel zur Variation der Gleiteigenschalten der Folie kann mindestens eine Schicht Gleitmittel- und/oder Antiblockmittel enthalten. Antiblockmittel sollten dabei vorzugsweise in die Folienaußenschichtengegeben werden, Gleitmittel auch in innenliegende Schichten.

Die Folie ist für die Bedruckung geeignet. Es kann mindestens eine Schicht engefärbt oder bedruckt sein.

Die Folie ist besonders für Verpackungsanwendung, besonders für die Verpackung von Lebensmitteln geeignet. Die Folie kann dabei sowohl für Heißabfüllungen als auch für die Erhitzung von Füllgut in der Folie bis hin zur Sterilisation gut eingesetzt werden. Die Folie ist geeignet für die Verpackung von Fleisch-und Wurstprodukten, Milchprodukten, Fisch- und Räucherwaren, Fertiggerichten, Brot- und Backwaren und medizinisch-technischen Geräten.

Überraschenderweise ist es durch die erfindungsgemäße Zusammensetzung der Folie gelungen die besonderen Anforderungen an die Sterilisationsfestigkeit bei guter Tiefziehbarkeit zu erfüllen. Nach dem Stand der Technik war nicht zu erwarten, daß eine sterilisationsfeste, sehr gut tiefziehbare, siegelbare Mehrschlichtfolie klebstofffrei zu fertigen ist.

Ferner überraschte, daß die Verbundhaftung und die Siegelfestigkeiten erfindungsgmäß hergestellter Folien nach der Sterilisation erstens größer waren als bei Folienverbunden, die klebstoffkaschiert wurden und zweitens deutlich größer waren als vor der Sterilisation, was mit nach dem Stand der Technik gefertigten klebstoffkaschierten nicht möglich ist.

Die Herstellung der beanspruchten Folie erfolgt zweckmäßigerweise entweder einstufig durch Blasfolien- bzw. Flachfilmcoextrusion oder mehrstufig durch Coextrusion mit Extrusionsbeschichtung. Kostengünstig ist die Coextrusion eines 4-schichtigen Trägers mit den, Aufbau PA / HV / PA / HV, der dann in line auf der HV-Seite mit dem Siegelschichtpolymer beschichtet wird.

Grundsätzlich ist die Extrusionsbeschichtung von LLDPE gekennzeichnet durch starkes "neck in" aufgrund sehr enger Molekulargewichtsverteilungen (Mw/Mn = 3 bis 3,5; Mw: Massemittel, Mn: Zahlenmittel). Dieses läßt sich kompensieren durch die erfindungsgemäße Bildung eines Polymerblends aus LLDPE und LDPE, wobei in diesen Falle vorzugsweise für die Beschichtung vorgesehene Typen mit breiter Molekulargewichtsverteilung verwendet werden sollten (Mw/Mn = 7 bis 8).

Die Extrusion von LLDPE ist gekennzeichnet durch vergleichsweise hohe Drücke. Diesem Effekt entgegen wirkt die Einstellung relativ hoher Extrusionstemperaturen. Sie sollten bei der Beschichtung vorzugsweise 260 bis 280 °C betragen.

Es kommen bekannte nach dem Stand der Technik übliche Anlagenkonzepte zur Anwendung, wobei im Fall der Blasfoliencoextrusion der Fertigungsvorgang dadurch gekennzeichnet ist, daß die Schmelze zum Schlauch geformt wird, welcher aufgeblasen, gekühlt und am anderen nun kalt gewordenem Ende von Quetschwalzen flachgelegt und geschlossen gehalten wird und anschließend die Folie aufgewickelt wird. Im Fall der Flachfoliencoextrusion werden sogenannte Chill-Roll-Anlagen eingesetzt, die als besonderes Merkmal große Kühlwalzen aufweisen, die den aus dem Werkzeug austretenden Schmelzefilm aufnehmen.

Zur Beurteilung der Erfindung wurde als ein Merkmal die Tiefziehbarkeit herangezogen. Zur Ermittlung der Tiefziehbarkeit wurden die zuvor gefertigten Folienmuster auf modernen Tiefziehautomaten, wie sie in der Verpackungsindustrie Anwendung finden (z.B. Tiromat, Multivac), getestet. Dazu wurden in der Maschine eingespannte Folienbahnen abschnittweise über eine Heizplatte erwärmt. Die Wärme kann dazu entweder von der Siegelseite oder auch der der Siegelseite abgewandten Seite der Folie erfolgen. Die mit Heizplattentemperaturen von 100 bis 110°C vorgewärmten Folien wurden anschließend durch Anlegen eines Vakuums in eine Mulde mit dem Rahmenmaß 185 x 115 mm gezogen. Die Tiefe der Mulde wurde zwischen 20 und 70 mm variiert.

Das Tiefziehergebnis wurde dazu wie folgt beurteilt:
1. Das Tiefziehergebnis ist mangelhaft, eine nicht akzeptable Anzahl von Versuchen eine Mulde zu formen, führt zu Aufrissen in der Folie:
   Merkmal"-"
2. Das Tiefziehergebnis ist gut, es treten keine Aufrisse auf und die Ausformung der Mulde ist zufriedenstellend:
   Merkmal "+"
3. Das Tiefziehergebnis ist sehr gut, es treten keine Aufrisse auf und die Ausformung der Mulde ist sehr gut:
   Merkmal "++"

Ein Teil der hergestellten Mulden wurden mit Wasser gefüllt und mit einer geigneten Deckelfolie in der Siegelstation oben genannter Tiefziehautomaten versiegelt. Die Siegeltemperaturen betrugen 145°C. Die so hergestellten Packungen wurden im Gegendruckautoklaven bei 121°C 30 Minuten sterilisiert. Anschließend wurde die Verbundhaftung in den Muldenecken gemessen und mit der Verbundhaftung in den Muldenecken vor der Sterilisation verglichen.

Die Prüfung der Verbundhaftung (VH) wird nach DIN 53 357, Verfahren B durchgeführt und soll Aufschluß darüber geben, wie fest die Einzelfolien einer Kombinationsfolie an der schwächsten Stelle aneinander haften. Unter Verbundhaftung wird der Maximalwert der Kraft verstanden, der notwendig ist um die zu prüfende Folie von einem Prüfstreifen in 15 mm Breite auf eine Länge von 10 mm unter einem Trennwinkel von 90 Grad spaltend zu trennen. Die Verbundhaftung wird in N bezogen auf die Streifenbreite angegeben (N/15 mm).

Ferner wurden aus den Musterfolien mit Wasser gefüllte Siegelrandbeutel der Größe 100 x 150 mm hergestellt und ebenfalls im Gegendruckautoklaven bei 121°C 30 Minuten sterilisiert. Die Bewertung des Sterilisationsergebnisses erfolgte in den Kategorien "ok" (der Siegelrandbeutel hat die Sterilisation unbeschadet überstanden) und "defekt" (der Siegelrandbeutel ist in Folge der Sterilisation defekt, Defekte treten an der Siegelschicht im Nahtbereich auf).

### Vergleichsbeispiele

Der Gegenstand der Erfindung soll an Hand folgender Beispiele erklärt werden.

### A. Beispiel 1:

Fünfschichtige, klebstofffreie Folie mit dem Aufbau

| |
|---|
| **PA / HV 1 / PA / HV 1 / PE 1** |
| 35 / 10 / 35 / 10 / 55 µm |

Der vierschichtige Träger PA / HV / PA / HV der Folie wurde als Flachfolie coextrudiert und die LLDPE-Schicht anschließend inline extrusionsbeschichtet. Als PA wurde Polyamid 6 der Dichte 1140 kg/m³ mit dem Kristallitschmelzpunkt 219°C und einer relativen Lösungsviscosität von 3,8 (PA-Konzentration 1%, Temperatur 25°C, gemessen in m-Kresol), als HV ein maleinsäureanhydridgepfropftes Linear Low Density Polyethylen (LLDPE) der Dichte 922 kg/m³ mit dem Kristallitschmelzpunkt 125°C und einem Schmelzindex (MFI 190/2,16) von 3,1 g/10min und als PE ein Copolymer aus Ethylen und Okten der Dichte 935 kg/m³ und dem Kristallitschmelzpunkt 126°C und einem Schmelzindex (MFI 190/2,16) von 4,4 g/10min eingesetzt.

### B. Beispiel 2:

Fünfschichtige, klebstofffreie Folie mit dem Aufbau

| |
|---|
| **PA / HV 2 / PA / HV 2 / PE 2** |
| 35 / 10 / 35 / 10 / 55 µm |

Die Herstellung der Folie erfolgte wie in Beispiel 1 beschrieben. Es wurde das gleiche Polyamid (PA) wie in Beispiel 1 eingesetzt, als HV ein maleinsäureanhydridgepfropftes Linear Low Density Polyethylen der Dichte 910 kg/m³ mit dem Kristallitschmelzpunkt 125°C und einem Schmelzindex (MFI 190/2,16) von 4,0 g/10min und als PE ein Polymerblend aus ein Copolymer aus Ethylen und Okten (LLDPE) der Dichte 935 kg/m³ und dem Kristallitschmelzpunkt 126°C und einem Schmelzindex (MFI 190/2,16) von 4,4 g/10min und einem Low Density Polyethylen LDPE der Dichte 923 kg/m³ mit einem Kristallitschmelzpunkt von 111°C und einem Schmelzindex (MFI 190/2,16) von 3,8 g/10min. Das Verhältnis von LLDPE:LDPE betrug 80:20.

### C. Beispiel 3:

Fünfschichtige, klebstofffreie Folie mit dem Aufbau

| |
|---|
| **PA / HV 2 / PA / HV 2 / PE 3** |
| 35 / 10 / 35 / 10 / 55 µm |

Die Herstellung der Folie erfolgte wie in Beispiel 1 beschrieben. Es wurde das gleiche Polyamid (PA) wie in Beispiel 1 eingesetzt, der gleiche Haftvermittler (HV) wie in Beispiel 2 und als PE ein Polymerblend aus den gleichen Materialien wie in Beispiel 2. Das Verhältnis von LLDPE:LDPE betrug 50:50.

### D. Vergleichsbeispiel 1:

Fünfschichtige, klebstofffreie Folie mit dem Aufbau

| |
|---|
| **PA / HV 2 / PA / HV 2 / PE 4** |
| 26/ 10 / 26 / 10 / 98 µm |

Die Herstellung der Folie erfolgte wie in Beispiel 1 beschrieben. Es wurde das gleiche Polyamid (PA) wie in Beispiel 1 und der gleiche Haftvermittler (HV) wie in Beispiel 2 eingesetzt. Als PE wurde ein LDPE der Dichte 934 kg/m³ und dem Kristallitschmelzpunkt 104°C und einem Schmelzindex (MFI 190/2,16) von 3,0 g/10min eingesetzt. Das LLDPE enthielt 700 ppm Erucasäureamid als Gleitmittel.

### E. Vergleichsbeispiel 2:

Sechsschichtige, klebstofffreie Folie mit dem Aufbau

| |
|---|
| **PA / HV 2 / PA / HV 2 / PE 5 / PE 6** |
| 25 / 9 / 25 / 9 / 76 / 26 µm |

Die Herstellung der Folie erfolgte ähnlich wie in Beispiel 1 beschrieben. Auf den vierschichtigen Träger wurde in diesem Fall die Siegelschicht coextrusionsbeschichtet, so daß die Siegelschicht aus zwei PE-Schichten bestellt. Es wurde das gleiche Polyamid (PA) wie in Beispiel 1 und der gleiche Haftvermittler (HV) wie in Beispiel 2 eingesetzt. PE 5 ist ein LDPE der Dichte 915 kg/m³ und dem Kristallitschmelzpunkt 104°C und einem Schmelzindex (MFI 190/2,16) von 8,0 g/10min und PE 6 ein Ethylen/Vinylacetatcopolymer (5% VAc) der Dichte 925 kg/m³ und dem Kristallitschmelzpunkt 101°C und einem Schmelzindex (MFI 190/2,16) von 7,5 g/10min.

### F. Vergleichsbeispiel 3:

Zweischichtige, klebstoffkaschierte Folie mit dem Aufbau

| |
|---|
| **PA / K / PE 7** |
| 70 / - / 75 µm |

Die PA-Schicht und die PE-Schicht wurden getrennt als Flach- bzw. Blasfolie gefertigt und anschließend mit Hilfe eines 2-Komponenten-Polyurethan-Klebstoffsystems kaschiert. Das PA ist das gleiche wie in Beispiel 1 beschrieben und das PE ein LLDPE der Dichte 935 kg/m³ einem Kristallitschmelzpunkt von 125°C und einem Schmelzindex (MFI 190/2,16) von 0,5 g/10min.

### G. Vergleichsbeispiel 4:

Zweischichtige, klebstoffkaschierte Folie mit dem Aufbau

| |
|---|
| **PA / K / PE 8** |
| 70 / - / 75 µm |

Die PA-Schicht und die PE-Schicht wurden getrennt als Flach- bzw. Blasfolie gefertigt und anschließend mit Hilfe eines 2-Komponenten-Polyurethan-Klebstoffsystems kaschiert. Das PA ist das gleiche wie in Beispiel 1 beschrieben und als PE wurde ein Polymerblend aus einem Copolymer aus Ethylen und Buten (LLDPE) der Dichte 921 kg/m³ und dem Kristallitschmelzpunkt 117°C und einem Schmelzindex (MFI 190/2,16) von 0,8 g/10min und einem Low Density Polyethylen LDPE der Dichte 923 kg/m³ mit einem Kristallitschmelzpunkt von 111°C und einem Schmelzindex (MFI 190/2,16) von 2,0 g/10min. Das Verhältnis von LLDPE:LDPE betrug 50:50.

Für die beschriebenen Folien A, B, C, D, E, F und G ist die Bewertung der Tiefziehbarkeit und Sterilisationsfestigkeit in Tabelle 1 dargestellt. Zur Ermittlung der Tiefziehbarkeit wurden Muden tiefgezogen und zur Ermittlung der Sterilisationsfestigkeit wurden Siegelrandbeutel hergestellt und wie oben beschrieben sterilisiert.

**Tabelle1**

| Bewertung des Folienaufbaus, der Siegelschicht, der Tiefziehbarkeit und sterilisierter Siegelrandbeutel für die Beispiele A bis G. | | | | | |
|---|---|---|---|---|---|
| | | **Folienaufbau** | **Siegelschicht** | **Tiefziehbarkeit** | **Siegelrandbeutel** |
| | | **klebstofffrei** | **erfindungsgemäß** | | **nach Sterilisation (30 Min., 121°C)** |
| A | Bsp. 1 | ja | ja | ++ | ok |
| B | Bsp. 2 | ja | ja | ++ | ok |
| C | Bsp. 3 | ja | ja | ++ | ok |
| D | Vgl. 1 | ja | nein | ++ | defekt |
| E | Vgl. 2 | ja | nein | ++ | defekt |
| F | Vgl. 3 | nein | ja | + | ok |
| G | Vgl. 4 | nein | nein | + | defekt |

Es ist erkennbar, daß die kaschierte Folie mit nicht erfindungsgemäßer Siegelschicht (G) werder sehr gut tiefziehbar noch sterilisationsfest ist, die klebstofffreien Folien (D, E) zwar sehr gut tiefziehbar, aber nicht sterilisationsfest sind, die kaschierte Folie mit erfindungsgemäßer Siegelschicht (F) zwar sterilisationsfest aber nicht besonders gut tiefziehbar ist und die Sterilisationsfestigkeit bei gleichzeitiger sehr guter Tiefziehbarkeit nur bei erfindungsgemäß hergestellten Folien (A, B, C) erreichbar ist.

Tabelle 2 beschreibt Verbundhaftungen vor der Sterilisation [VH(vor)] und nach der Sterilisation [VH(nach)] sowie die Änderung [VH(nach)-VH(vor)]. Untersucht wurden die sterilisationsfesten Muster A, B, C und F. Die Herstellung der Mulden (Ziehtiefe 60 mm), die Sterilisation (30 Minuten, 121°C) und die Messung der Verbundhaftung wurden wie ober beschrieben durchgeführt.

**Tabelle 2**

| Verbundhaftungen vor der Sterilisation [VH(vor)] und nach der Sterilisation [VH(nach)] sowie die Änderung [VH(nach)-VH(vor)], gemessen in den Muldenecken an 60 mm tiefgezogenen Packungen. Sterilisation: 30 Minuten, 121°C. | | | | |
|---|---|---|---|---|
| | | **VH (vor)** | **VH (nach)** | **VH (nach) - VH (vor)** |
| | | **[N/15mm]** | **[N/15mm]** | **[N/15mm]** |
| A | Bsp. 1 | 2,6 | 4,8 | 2,2 |
| B | Bsp. 2 | 3,6 | 7,2 | 3,6 |
| C | Bsp. 3 | 2,3 | 5,8 | 3,5 |
| D | Vgl. 1 | nicht gemessen | nicht gemessen | nicht gemessen |
| E | Vgl. 2 | nicht gemessen | nicht gemessen | nicht gemessen |
| F | Vgl. 3 | 1,3 | 1,7 | 0,4 |
| G | Vgl. 4 | nicht gemessen | nicht gemessen | nicht gemessen |

Es ist deutlich erkennbar, die Verbundhaftung in der Muldenecke der Vergleichsfolie F bereits vor der Sterilisation für Standardanwendungen (Forderung: VH > 2 N/15mm) zu klein und deutlich geringer ist, als bei den erfindungsgemäß hergestellten Folien A, B und C. Ferner kann festgestellt werden, daß nach der Sterilisation bei der Folie F praktisch keine Änderung der Verbundhaftung auftritt, wohingegen bei den Folien A, B, und C die Verbundhaftungswerte nach der Sterilisation in erster Näherung verdoppelt wurden.

## Patentansprüche

1. Mehrschichtige, tiefziehbare und sterilisationsfeste Folie mit dem Schichtenaufbau A / B / A / B / C, dadurch gekennzeichnet,daß
- A ein Polyamid (PA) ist,
- B ein polymerer Haftvermittler (HV) mit einem Kristallitschmelzpunkt von größer oder gleich 121°C ist und
- C ein Polyethylen (PE) ist, bestehend aus einem Homopolymer des Polyethylen, aus einem Copolymer des Polyethylen oder aus einem Polyolefinblend aus Polyethylen, wobei mindestens eine Komponente der Schicht C einen Kristallitschmelzpunkt von größer oder gleich 121°C hat.

2. Folie nach Ansprüch 1, dadurch gekennzeichnet, daß das Polyethylen (PE) ein Linear Low Density Polyethylen (LLDPE) oder ein Polyolefinblend aus Linear Low Density Polyethylen (LLDPE) und Low Density Polyethylen (LDPE) ist.

3. Folie nach einem der Ansprüche 1 oder 2, dadurch gekennzeichnet, daß das Linear Low Density Polyethylen (LLDPE) ein Copolymer aus Ethylen und einem C3 bis C12 alpha-Olefin ist, mit einem Melt Flow Index (MFI) von 0,1 bis 20 g/min (190°C; 2,16 kg), einer Dichte von 0,915 bis 0,955 g/cm³ und einen Kristallitschmelzpunkt von größer oder gleich 121°C.

4. Folie nach einem der Ansprüche 1 bis 3, dadurch gekennzeichnet, daß das Low Density Polyethylen (LDPE) einen Melt Flow Index (MFI) von 0,1 bis 20 g/min (190°C; 2,16 kg) und eine Dichte von 0,915 bis 0,935 g/cm³ hat.

5. Folie nach einem der Ansprüche 1 bis 4, dadurch gekennzeichnet, daß das Verhältnis von LLDPE zu LDPE 99:1 bis 30:70 beträgt.

6. Folie nach einem der Ansprüche 1 bis 5, dadurch gekennzeichnet, daß das Polyamid aus den aliphatischen Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten, aus einem aromatischen oder teilaromatischem Polyamid oder aus einer Mischung der genannten Polyamide besteht.

7. Folie nach einem der Ansprüche 1 bis 6, dadurch gekennzeichnet, daß der polymere Haftvermittler ein anhydridmodifiziertes Polyethylen, ein Säurecopolymer des Ethylen, ein säuremodifiziertes Ethylenvinylacetat, ein säuremodifiziertes Ethylen(meth)acrylat, anhydridmodifiziertes Ethylen(meth)acrylat, ein anhydridmodifiziertes Ethylenvinylacetat, ein säure-/acrylatmodifiziertes Ethylenvinylacetat oder ein Polymerblend ist, enthaltend mindestens einen der in diesem Anspruch genannten Haftvermittler.

8. Folie nach einem der Ansprüche 1 bis 7, dadurch gekennzeichnet, daß der Haftvermittler ein anhydridmodifiziertes Polyethylen ist.

9. Folie nach einem der Ansprüche 1 bis 8, dadurch gekennzeichnet, daß der Haftvermittler (HV) ein maleinsäureanhydridgepfropftes Linar Low Density Polyethylen (LLDPE) ist.

10. Folie nach einem der Ansprüche 1 bis 9, dadurch gekennzeichnet, daß die Gesamtdicke der Folie 20 bis 500 µm beträgt.

11. Folie nach einem der Ansprüche 1 bis 10, dadurch gekennzeichnet, daß die Summe aus den Dicken der A-Schichten 20% bis 70% der Gesamtfoliendicke ausmachen, wobei das Verhältnis aus der Summe der Dicken der B-Schicht zur Summe aus den Dicken der A-Schichten 0,1 bis 1 und das Verhältnis aus der Dicke der C-Schicht zur Summe aus den Dicken der A-Schichten 0,2 bis 3 beträgt.

12. Verfahren zur Herstellung einer Folie nach einem der Ansprüche 1 bis 11, dadurch gekennzeichnet, daß die Folie einstufig durch Coextrusion als Blas- oder Flachfilm hergestellt wird oder durch ein mehrstufiges Verfahren aus Extrusion und Extrusionsbeschichtung.

13. Verfahren zur Herstellung einer Folie nach Anspruch 12, dadurch gekennzeichnet, daß die Schichtenfolge A / B / A / B coextrudiert und anschließend die Schicht C in line beschichtet wird.

14. Verwendung einer Folie gemäß einem der Ansprüche 1 bis 11 als Verpackungsfolie.

15. Verwendung einer Folie gemäß Anspruch 14 als Verpackungsfolie für Lebensmittel.

## Claims

1. Multilayer, thermoformable and sterilisation-resistant film with an A / B / A / B / C layer structure, characterised in that
- A is a polyamide (PA),
- B is a polymeric coupling agent (HV) with a crystallite melting point of greater than or equal to 121°C and
- C is a polyethylene (PE), consisting of a polyethylene homopolymer, of a polyethylene copolymer or of a polyolefin blend prepared from polyethylene, wherein at least one component of layer C has a crystallite melting point of greater than or equal to 121°C.

2. Film according to claim 1, characterised in that the polyethylene (PE) is a linear low density polyethylene (LLDPE) or a polyolefin blend prepared from linear low density polyethylene (LLDPE) and low density polyethylene (LDPE).

3. Film according to one of claims 1 or 2, characterised in that the linear low density polyethylene (LLDPE) is a copolymer of ethylene and a C₃ to C₁₂ α-olefin with a melt flow index (MFI) of 0.1 to 20 g/min (190°C; 2.16 kg), a density of 0.915 to 0.955 g/cm³ and a crystallite melting point of greater than or equal to 121°C.

4. Film according to one of claims 1 to 3, characterised in that the low density polyethylene (LDPE) has a melt flow index (MFI) of 0.1 to 20 g/min (190°C; 2.16 kg) and a density of 0.915 to 0.935 g/cm³.

5. Film according to one of claims 1 to 4, characterised in that the ratio of LLDPE to LDPE is 99:1 to 30:70.

6. Film according to one of claims 1 to 5, characterised in that the polyamide consists of the aliphatic polyamides PA-6, PA-11, PA-12, PA-66, PA-6,66, PA-6,8, PA-6,9, PA-6,10, PA-6,11, PA-6,12, of a copolymer prepared from the monomer units contained therein, of an aromatic or partially aromatic polyamide or of a mixture of the stated polyamides.

7. Film according to one of claims 1 to 6, characterised in that the polymeric coupling agent is an anhydride-modified polyethylene, an acid copolymer of ethylene, an acid-modified ethylene vinyl acetate, an acid-modified ethylene (meth)acrylate, anhydride-modified ethylene (meth)acrylate, an anhydride-modified ethylene vinyl acetate, an acid/acrylate-modified ethylene vinyl acetate or a polymer blend containing at least one of the coupling agents stated in this claim.

8. Film according to one of claims 1 to 7, characterised in that the coupling agent is an anhydride-modified polyethylene.

9. Film according to one of claims 1 to 8, characterised in that the coupling agent (HV) is a maleic anhydride grafted linear low density polyethylene (LLDPE).

10. Film according to one of claims 1 to 9, characterised in that the total thickness of the film is 20 to 500 µm.

11. Film according to one of claims 1 to 10, characterised in that the sum of the thicknesses of the A layers constitutes 20 to 70% of the total film thickness, wherein the ratio of the sum of the thicknesses of the B layer to the sum of the thicknesses of the A layers is 0.1 to 1 and the ratio of the thickness of the C layer to the sum of the thicknesses of the A layers is 0.2 to 3.

12. Process for the production of a film according to one of claims 1 to 11, characterised in that the film is produced in a single stage by coextrusion as a blown or flat film or by a multistage process comprising extrusion and extrusion coating.

13. Process for the production of a film according to claim 12, characterised in that the sequence of layers A / B / A / B is coextruded and layer C is then coated in line.

14. Use of a film according to one of claims 1 to 11 as a packaging film.

15. Use of a film according to claim 14 as a packaging film for foodstuffs.

## Revendications

1. Feuille multicouche, emboutissable et stérilisable ayant la structure de couches A / B / A / B / C, caractérisée en ce que
- A est un polyamide (PA) ;
- B est un promoteur d'adhésion (AD) polymère avec un point de fusion des cristallites supérieur ou égal à 121 °C ; et
- C est un polyéthylène (PE) composé d'un homopolymère de polyéthylène, d'un copolymère de polyéthylène ou d'un mélange polyoléfinique à base de polyéthylène, au moins un composant de la couche C ayant un point de fusion des cristallites supérieur ou égal à 121 °C.

2. Feuille selon la revendication 1, caractérisée en ce que le polyéthylène (PE) est un polyéthylène linéaire basse densité (PELBD) ou un mélange polyoléfinique de polyéthylène linéaire basse densité (PELBD) et de polyéthylène basse densité (PEBD).

3. Feuille selon l'une des revendications 1 ou 2, caractérisée en ce que le polyéthylène linéaire basse densité (PELBD) est un copolymère d'éthylène et d'une alpha-oléfine en C₃ à C₁₂ avec un indice de fusion (MFI) de 0,1 à 20 g/min (190 °C ; 2,16 kg), une densité de 0,915 à 0,955 g/cm³ et un point de fusion des cristallites supérieur ou égal à 121 °C.

4. Feuille selon l'une des revendications 1 à 3, caractérisée en ce que le polyéthylène linéaire basse densité (PELBD) a un indice de fusion (MFI) de 0,1 à 20 g/min (190 °C ; 2,16 kg) et une densité de 0,915 à 0,935 g/cm³.

5. Feuille selon l'une des revendications 1 à 4, caractérisée en ce que le rapport du PELBD sur le PEBD est de 99/1 à 30/70.

6. Feuille selon l'une des revendications 1 à 5, caractérisée en ce que le polyamide se compose des polyamides aliphatiques PA 6, PA 11, PA 12, PA 66, PA 6.66, PA 6.8, PA 6.9, PA 6.10, PA 6.11, PA 6.12, d'un copolymère des unités monomères contenues dans ceux-ci, d'un polyamide aromatique ou partiellement aromatique, ou bien d'un mélange des polyamides cités.

7. Feuille selon l'une des revendications 1 à 6, caractérisée en ce que' le promoteur d'adhésion est un polyéthylène modifié par un anhydride, un copolymère d'éthylène avec un acide, un vinylacétate d'éthylène modifié par un acide, un (méth)acrylate d'éthylène modifié par un acide, un (méth)acrylate d'éthylène modifié par un anhydride, un vinylacétate d'éthylène modifié par un anhydride, un vinylacétate d'éthylène modifié par un acide/acrylate, ou un mélange de polymères contenant au moins un des promoteurs d'adhésion cités dans cette revendication.

8. Feuille selon l'une des revendications 1 à 7, caractérisée en ce que le promoteur d'adhésion est un polyéthylène modifié par un anhydride.

9. Feuille selon l'une des revendications 1 à 8, caractérisée en ce que le promoteur d'adhésion est un polyéthylène linéaire basse densité (PELBD) greffé avec un anhydride de l'acide maléique.

10. Feuille selon l'une des revendications 1 à 9, caractérisée en ce que l'épaisseur totale de la feuille est de 20 à 500 µm.

11. Feuille selon l'une des revendications 1 à 10, caractérisée en ce que la somme des épaisseurs des couches A représente de 20 à 70 % de l'épaisseur totale de la feuille, tandis que le rapport de la somme des épaisseurs des couches B sur la somme des épaisseurs des couches A est de 0,1 à 1 et le rapport de l'épaisseur de la couche C sur la somme des épaisseurs des couches A est de 0,2 à 3.

12. Procédé de fabrication d'une feuille selon l'une des revendications 1 à 11, caractérisé en ce que la feuille est produite en une seule étape par coextrusion sous forme de gaine soufflée ou de film à plat, ou bien en plusieurs étapes par coextrusion et revêtement par extrusion.

13. Procédé de fabrication d'une feuille selon la revendication 12, caractérisée en ce que l'on coextrude la séquence de couches A / B / A / B et ensuite on applique en ligne la couche C.

14. Utilisation d'une feuille selon l'une des revendications 1 à 11 comme feuille d'emballage.

15. Utilisation d'une feuille selon la revendication 14 comme feuille d'emballage pour des produits alimentaires.
